# FASCICULE DE BREVET EUROPEEN

(11) **EP 0 680 700 B1**
(45) Date de publication et mention de la délivrance du brevet: **07.11.2001**
(21) Numéro de dépôt: 95400970.0
(22) Date de dépôt: 28.04.1995
(51) Int. Cl.: A23L 1/05, A23L 1/32

(54) **Granules de biopolymères comme additifs alimentaires**
Granulierte Biopolymere als Lebensmittelzusatz
Granulated biopolymers as food additives

(30) Priorité: 06.05.1994 FR 9405587
(43) Date de publication de la demande: 08.11.1995
(73) Titulaire: Meyhall Chemical AG, CH-8280 Kreuzlingen (CH)
(72) Inventeur: Dupuis, Guy, F-69160 Tassaint la Demi Lune (FR); Mauger, Frédéric, F-42310 Changy (FR); Urlacher, Brice, F-75014 Paris (FR)
(74) Mandataire: Seugnet, Jean Louis

(56) Documents cités:
- EP-A- 0 153 206
- FR-B- 2 197 529
- GB-A- 2 086 204
- US-A- 4 557 938
- DATABASE WPI Week 7819 Derwent Publications Ltd., London, GB; AN 78-33910A & JP-A-53 032 161 (N. YAMATANI) , 27 Mars 1978

## Description

La présente invention concerne l'utilisation comme additif alimentaire , en alimentation humaine ou animale, de granulés de biopolyméres comportant de 95 à 50 parties en poids de gomme guar pour 5 à 50 parties en poids de gomme xanthane à une teneur pondérale comprise entre 0.1 et 0.3 %; application notamment à la stabilisation des coules d'oeuf (blanc d'oeuf, jaunes d'oeuf, etc....)

Les biopolymères du type gomme xanthane, gomme de guar, gomme de caroube, gomme de tara, carraghenane, pectine, les dérivés de la cellulose et les alginates sont bien connus comme additifs alimentaires où ils sont généralement utilisés comme agent de texture ou agent de contrôle de la viscosité par exemple dans les sauces salades où les concentrés de soupes .

Dans de nombreuses applications, il est nécessaire de mettre le biopolymère sous la forme d'une solution aqueuse faiblement concentrée.

Or, il est bien connu que l'inconvénient principal des poudres de biopolymères est leur difficulté à se dissoudre rapidement même sous une agitation à effet de cisaillement élevé.
Sous l'effet d'une hydratation trop rapide, les grains au contact de l'eau s'entourent d'un mince film gélifié et s'agglomèrent en grumeaux qui se désagrègent et se dissolvent difficilement.

On a déjà proposé des solutions techniques à ce problème.

Un premier type de solution consiste à préparer des compositions liquides de biopolymères qui sont soit des suspensions dans un liquide organique non solvant du polymère (EP-A- 39128) soit des émulsions (FR-A-2.548.676).

Une autre solution est de présenter les biopolymères sous forme de granulés.

Une telle technique visant la granulation de mélanges de biopolymères au moyen d'un extracteur/granulateur est décrite dans GB-A 2.086.204.

U.S.A. 4.557.938 décrit la préparation, au moyen d'un lit fluidisé, de granules qui sont formés d'un mélange d'une gomme végétale telle qu'une gomme xanthane, guar, caroube, en mélange avec de l'amidon.

EP-A 254 603 décrit la préparation de granulés de gomme xanthane, également par la technique du lit fluidisé et en présence d'un agent mouillant.

FR-B-2 197 529 décrit l'utilisation d'un mélange de gomme guar et de gomme xanthane comme additif dans un produit liquide à base d'oeuf.

Ces granulés ont permis de réaliser un progrès technique important mais qui s'avère ne pas donner entière satisfaction lors de leur utilisation dans des produits alimentaires très visqueux tels que plus particulièrement les coules d'oeufs. Selon l'invention, on entend par coules d'oeufs tout produit fluide ou liquide à base d'oeufs tels que les blancs d'oeufs, les jaunes d'oeufs, les oeufs entiers.

Le banc d'oeufs, utilisé par exemple en pâtisserie, doit avoir comme principale fonctionnalité un pouvoir moussant significatif permettant de l'utiliser pour la fabrication de produits à texture spongieuse tels que des génoises, des meringues et des biscuits à la cuillère.

Toutefois, de façon à ce que ces blanc d'oeufs et plus généralement les coules d'oeufs, respectent les normes microbiologiques et soient exempts de germes patogènes, ces produits sont de préférence traités par voie thermique.
Cependant ce traitement thermique affecte le pouvoir moussan et la stabilité de la mousse.
Cet affaiblissement du pouvoir moussant est responsable par exemple de la retombée des blancs montés en neige.

La présente invention a permis de résoudre les problèmes mentionnés ci-dessus.

Elle concerne en effet des granulés de biopolymères utilisables comme additif alimentaire pour l'alimentation humaine ou animale, caractérisé en ce qu'ils comportent de 95 à 50, de préférence 85 à 75, parties de gomme guar pour 5 à 50, de préférence 15 à 25, parties de gomme xanthane.

Jusqu'à 90 % en poids de la gomme xanthane et/ou jusqu'à 90 % de la gomme guar peuvent être remplacés par un biopolymère choisi parmi la gomme de caroube, la gomme tara, la carraghenane, la pectine, les alginates et les dérivés épaississants alimentaires de la cellulose. Ces dérivés alimentaires de la cellulose sont par exemple la carboxyméthylcellulose, les hydroxyéthylcellulose, les hydroxypropylcellulose etc....

Les granulés selon l'invention sont obtenus par granulation de la poudre de biopolymère en lit fluidisé telle qu'enseignée par EP-A 254 603 ou US-A 4 557 938 précités. L'utilisation d'un agent mouillant et/ou d'un agent dispersant, comme enseigné par EP-A 254 603, est utile dans certain cas mais n'est pas indispensable.

Selon l'invention un mélange de poudre de guar et de gomme xanthane est mis en lit fluidisé par atomisation de la poudre, puis on pulvérise de l'eau ou une solution aqueuse pouvant contenir éventuellement un ou les biopolymères à granuler, sur la poudre en suspension dans le lit fluidisé.

Selon une variante, au lieu d'introduire directement le mélange de poudre dans le réacteur à lit fluidisé, on peut introduire dans le réacteur chaque gomme par des ouvertures séparées.
On peut également alors granuler totalement une des gommes puis sur ces mêmes granulés, granuler la gomme restante.

On peut également utiliser un mélange de granulés de chacune des gommes.

Selon l'invention, on recommande d'utiliser des granulés constitués d'un mélange intime et sensiblement homogène des gommes.

On recommande également d'utiliser des granulés présentant une granulométrie moyenne comprise entre 0,3 et 2 mm et ayant une densité apparente comprise entre 0,3 et 0,7.
De plus le degré d'aération des granulés, exprimé par le rapport : 1 - (densité apparente granulés/ densité apparente de la poudre de dépôt) est de préférence compris entre 50 et 70 %.

Les granulés selon l'invention s'écoulent librement et ne forment pas de poussière pendant la manutention. Ils se dispersent instantanément dans l'eau sous faible agitation, sans nécessiter de précautions particulières et sans formation de grumaux.

Les granulés selon l'invention sont utilisables dans toutes sortes d'aliments, mais de préférence dans les produits alimentaires se présentant sous une forme liquide plus ou moins visqueuse, plus particulièrement les coules d'oeuf et/ou sous une forme de suspension de matières solubles et/ou d'émulsion de produits huileux dans une solution aqueuse. On peut citer comme exemples , les boissons à base de pulpe de fruits, les concentrés de boissons, les sauces salades, les plats cuisinés, les glaces, sorbets et crèmes glacées ...
Comme exemples d'aliments pour animaux ou les granulés selon l'invention sont utilisables, on peut citer les mélasses ou vinasses et les laits de remplacement pour veaux.

On recommande d'utiliser dans les coules d'oeufs de 0,1 à 0,3% en poids de granulés selon l'invention. La teneur en granulés peut être plus forte dans les milieux alimentaires très visqueux et concentrés tels que les concentrés de boisson et les préparations diététiques.

Les exemples suivants illustrent l'invention sans en limiter la portée. Dans ce qui suit ou ce qui précède les pourcentages et parties sont en poids sauf mentions contraires expresses.

### Exemple 1 : préparation d'un granulé gomme xanthane/guar.

On part d'une gomme xanthane en poudre dont les caractéristiques sont les suivantes :
- densité apparente : 0,7 à 0,8 g/cm³
- humidité : inférieure à 12 %
- granulométrie : au moins 95 % inférieure à 175 µm et 100 % inférieure à 250 µm

On part également d'une poudre de guar ayant les caractéristiques suivantes :
- densité apparente : 0,45 à 0,60 g/cm³
- humidité inférieure à 12 %
- granulométrie au moins 90 % inférieure à 175 µm et 100 % inférieure à 275 µm

On effectue un mélange homogène des 2 poudres suivant un rapport massique gomme xanthane/gomme guar = 80/20.

On introduit 200 g d'un mélange de poudre dans un granulateur de laboratoire à lit fluide AEROMATIC® ayant un volume de 16,5 litres.

La poudre est mise en lit fluidisé par injection d'air chauffé à 30°C avec un débit de 30 m³/h. On pulvérise également de l'eau suivant un débit de 20 ml/minute pendant 5 minutes au moyen d'une buse bifluide. On sèche les granulés obtenus jusqu'à un contenu en humidité résiduelle de 8 %. Les granulés obtenus sont fluides non collants, se dispersent instantanément dans l'eau et présentent les caractéristiques suivantes :
- granulométrie au plus 1 % supérieure à 850 µm et au plus 5 % inférieure à 75 µm
- densité 0,4 à 0,45
- degré d'aération 55 à 80 %

### Exemple 2 : préparation de blancs d'oeufs

Le blanc d'oeuf issu du cassage des oeufs est filtré pour éliminer les traces de coquilles puis est refroidi à 4°C avant d'être placé dans un réservoir de stockage.

On incorpore par saupoudrage les granulés de biopolymère dans les blancs d'oeufs maintenus sous agitation pour assurer l'homogénéité du mélange et une bonne dispersion et hydratation des gommes.

Après avoir maintenu l'agitation pendant 20 à 30 minutes, on pompe le blanc d'oeuf vers un appareil à pasteurisation où il subit un traitement thermique à une température comprise entre 50 et 60°C pendant quelques minutes puis il est refroidi à 4°C avant son conditionnement.

### Evaluation du pouvoir moussant :

On prélève pour chaque essai 100 g de blanc d'oeuf préparé ci-dessus que l'on introduit dans un bêcher gradué dont le diamètre est de 120 mm.

On bat les blancs pendant 4 minutes à l'aide d'un batteur type MOULINEX© monovitesse à 2 bras et on lit sur le bêcher le volume V. de mousse.

Les résultats obtenus sont rassemblés dans le tableau 1 ci-après où l'on a utilisé des teneurs croissantes de granulés dans le blanc d'oeufs.

Du tableau 1, il ressort que l'efficacité maximale des granulés est obtenue à une teneur comprise entre 0,15 et 0,25 % dans la mesure où l'on considère qu'une viscosité maximale de 30 mPa.s est la viscosité maximale acceptable pour blanc d'oeufs cru avant traitement thermique.

### Exemple comparatif 3

On répète exactement le mode opératoire de l'exemple 1 sauf que l'on remplace la guar par de la carboxyméthyl cellulose (CMC) (mélange M1) ou par de l'albuvir (mélange M2) ou par de la xanthane (X1). On remplace également toute la xanthane par du CMC (mélange M3).

On obtient alors des granulés M1, M2, M3 et X1 dont on évolue le pouvoir moussant dans les conditions expérimentales de l'exemple 2 ci-dessus.

Les résultats obtenus sont rassemblés dans le tableau 2 ci-après.

Du tableau 2 il apparaît que le mélange selon l'invention a le meilleur pouvoir stabilisant à une teneur comprise entre 0,15 et 0,25 %.

**TABLEAU 1**

| **ESSAI** | **TENEUR EN GRANULE (%)** | **VOLUME DE MOUSSE (en ml)** | **VISCOSITE DU BLANC (en mPa.S)** |
|---|---|---|---|
| 1 | 0 | 750 | 20 |
| 2 | 0,05 | 750 | 21 |
| 3 | 0,1 | 750 | 25 |
| 4 | 0,15 | 875 | 27 |
| 5 | 0,2 | 875 | 29 |
| 6 | 0,25 | 900 | 31 |
| 7 | 0,3 | 900 | 45 |
| 8 | 0,35 | 930 | 51 |

**TABLEAU 2**

| **ESSAI COMPARATIF** | **BIOPOLYMERE** | **TENEUR EN GRANULE (%)** | **VOLUME DE MOUSSE (ml)** |
|---|---|---|---|
| 9 | M1 | 0,10 | 680 |
| 10 | M1 | 0,20 | 650 |
| 11 | M2 | 0,15 | 790 |
| 12 | M3 | 0,10 | 650 |
| 13 | M3 | 0,20 | 580 |
| 14 | X1 | 0,05 | 750 |
| M1 : gomme xanthane / CMC (80/20) | | | |
| M2 : gomme xanthane / albuvir (80/20) | | | |
| M3: guar/CMC (20/80) | | | |
| X1 : gomme xanthane pur | | | |

## Revendications

1. Utilisation dans des coules d'oeufs, plus particulièrement du blanc d'oeuf, de granulés de biopolymères comportant de 95 à 50, de préférence 85 à 75, parties en poids de gomme guar pour 5 à 50, de préférence 15 à 25, parties en poids de gomme xanthane à une teneur pondérale comprise entre 0,1 et 0,3 %.

2. Utilisation de granulés de biopolymères selon la revendication 1, **caractérisée en ce que** le blanc d'oeuf est stabilisé thermiquement.

3. Utilisation de granulés de biopolymères selon la revendication 1, **caractérisée en ce que** jusqu'à 90 % en poids de la gomme xanthane et/ou jusqu'à 90 % en poids de la gomme guar peuvent être remplacés par un biopolymère choisi parmi la gomme de caroube, la gomme tara, la carraghenane, la pectine, les alginates et les dérivés alimentaires épaississants de la cellulose.

4. Utilisation des granulés de biopolymères selon l'une quelconque des revendications 1 à 3, **caractérisée en ce que** les granulés sont préparés par mise en lit fluidisé d'un mélange homogène de poudre des biopolymères et pulvérisation d'eau ou d'une solution aqueuse sur la poudre en lit fluidisé.

5. Utilisation de granulés de biopolymères selon la revendication 4, **caractérisée en ce que** chacune des gommes est pulvérisée séparément.

6. Utilisation de granulés de biopolymères selon la revendication l'une quelconque des revendications 1 à 5, **caractérisée en ce que** lesdits granulés sont constitués d'un mélange intime et sensiblement homogène des gommes.

7. Utilisation de granulés de biopolymères selon l'une quelconque des revendications 1 à 5, **caractérisée en ce que** lesdits granulés présentent une granulomètrie comprise entre 0,5 et 2 mm et une densité apparente comprise entre 0,3 et 0,7.

## Patentansprüche

1. Verwendung von Biopolymer-Granulaten, umfassend 95 bis 50, vorzugsweise 85 bis 75 Gewichtsteile Guargummi pro 5 bis 50, vorzugsweise 15 bis 25 Gewichtsteile Xanthangummi mit einem gewichtsmäßigen Gehalt zwischen 0,1 % und 0,3 %, in Flüssig-Ei, insbesondere in Eiweiß.

2. Verwendung von Biopolymer-Granulaten nach Anspruch 1, **dadurch gekennzeichnet, daß** das Eiweiß thermisch stabilisiert ist.

3. Verwendung von Biopolymer-Granulaten nach Anspruch 1, **dadurch gekennzeichnet, daß** bis zu 90 Gew.-% Xanthangummi und/oder bis zu 90 Gew.-% Guargummi durch ein Biopolymer, ausgewählt unter Johannisbrot, Taragummi, Carraghenan, Pectin, Alginaten und den verdickenden Nahrungsmittel-Derivaten der Cellulose, ersetzt werden können.

4. Verwendung von Biopolymer-Granulaten nach irgendeinem der Ansprüche 1 bis 3, **dadurch gekennzeichnet, daß** die Granulate durch Anwendung eines fluidisierten Bettes ausgehend von einer homogenen Mischung von Biopolymer-Pulver und Versprühen von Wasser oder einer wäßrigen Lösung auf das Pulver im fluidisierten Bett hergestellt werden.

5. Verwendung von Biopolymer-Granulaten nach Anspruch 4, **dadurch gekennzeichnet, daß** jeder der Gummis getrennt versprüht wird.

6. Verwendung von Biopolymer-Granulaten nach irgendeinem der Ansprüche 1 bis 5, **dadurch gekennzeichnet, daß** die genannten Granulate aus einer innigen und in etwa homogenen Mischung der Gummis bestehen.

7. Verwendung von Biopolymer-Granulaten nach irgendeinem der Ansprüche 1 bis 5, **dadurch gekennzeichnet, daß** die genannten Granulate eine Granulometrie zwischen 0,5 und 2 mm und eine scheinbare Dichte zwischen 0,3 und 0,7 aufweisen.

## Claims

1. Use in the liquid portions of eggs, more particularly egg whites, of biopolymer granules comprising 95 to 50, preferably 85 to 75 parts by weight of guar gum for 5 to 50, preferably 15 to 25 parts by weight of xanthan gum for a content by weight comprised between 0.1 and 0.3%.

2. Use of biopolymer granules according to claim 1, **characterized in that** the egg white is thermally stabilized.

3. Use of biopolymer granules according to claim 1, **characterized in that** up to 90% by weight of xanthan gum and/or up to 90% by weight of guar gum can be replaced by a biopolymer chosen from carob gum, tara gum, carrageenan, pectin, alginates and the food thickening derivatives of cellulose.

4. Use of biopolymer granules according to any one of claims 1 to 3, **characterized in that** the granules are prepared by placing a homogeneous mixture of biopolymer powder in a fluidized bed and spraying water or an aqueous solution onto the powder in the fluidized bed.

5. Use of biopolymer granules according to claim 4, **characterized in that** each gum is sprayed separately.

6. Use of biopolymer granules according to any one of claims 1 to 5, **characterized in that** said granules are constituted by an intimate and substantially homogeneous mixture of gums.

7. Use of biopolymer granules according to any one of claims 1 to 5, **characterized in that** said granules have a graaulometry comprised between 0.5 and 2 mm and an apparent density comprised between 0.3 and 0.7.
